# FASCICULE DE BREVET EUROPEEN

(11) **EP 4 677 739 B1**
(45) Date de publication et mention de la délivrance du brevet: **09.12.2026**
(21) Numéro de dépôt: 24704867.1
(22) Date de dépôt: 19.02.2024
(51) Int. Cl.: H02S 20/32

(54) **INFRASTRUCTURE PHOTOVOLTAÏQUE À INSTALLATION RAPIDE**
SCHNELLINSTALLIERENDE FOTOVOLTAISCHE INFRASTRUKTUR
FAST-INSTALLATION PHOTOVOLTAIC INFRASTRUCTURE

(30) Priorité: 10.03.2023 FR 2302225
(43) Date de publication de la demande: 14.01.2026
(73) Titulaire: Bertin, Patrick, 35140 Saint Ouen Des Alleux (FR)
(72) Inventeur: Bertin, Patrick, 35140 Saint Ouen Des Alleux (FR)
(74) Mandataire: Lequien, Philippe
(86) Numéro de dépôt international: PCT/EP2024/054183
(87) Numéro de publication internationale: WO 2024/188597

(56) Documents cités:
- CN-A- 112 514 244
- DE-A1- 3 525 065
- US-A1- 2011 017 276

## Description

Le domaine de l'invention est celui de la conception et de la fabrication des infrastructures photovoltaïques.

Plus précisément, l'invention concerne en particulier une infrastructure photovoltaïque à installation rapide.

Une telle infrastructure photovoltaïque est notamment destinée à suivre le déplacement du soleil pour permettre une production d'énergie électrique sur une journée complète ou quasiment.

Classiquement, une infrastructure photovoltaïque comme décrite dans le document US 2011017276 A1, comprend une armature sur laquelle est montée une structure photovoltaïque.

La structure photovoltaïque comprend :
- un support formé par un assemblage de profilés définissant une surface de support, et
- des panneaux photovoltaïques, définissant ensemble une surface de couverture.

La structure photovoltaïque est montée mobile sur l'armature de sorte à assurer son inclinaison par rapport à un sol sur lequel l'armature repose.

Par ailleurs, pour permettre à la structure photovoltaïque de suivre le déplacement du soleil, l'armature est mobile par rapport au sol sur lequel elle repose.

Plus spécifiquement, l'armature est montée sur au moins un rail formant une piste circulaire ou en arc de cercle, le ou les rails étant installés sur une dalle en béton.

L'installation d'une telle infrastructure photovoltaïque demande un temps important et représente un coût non négligeable qui peut conduire à un abandon de projet pour raisons financières.

La durée d'installation s'explique notamment par le fait que le coulage des dalles de béton demande des travaux de terrassement qui impliquent :
- une étude de terrain pour définir les dimensions de la dalle de béton ;
- un décaissement du sol ;
- une coulée de béton avec la mise en place préalable d'une structure de renforcement, et
- le séchage de la dalle avant installation de l'infrastructure photovoltaïque.

Par ailleurs, lors du décaissement du sol, la législation oblige à une évacuation et un traitement des terres extraites.

De plus, le temps de séchage peut généralement durer de 3 semaines à 2 mois en fonction des conditions climatiques, ce temps n'étant pas compressible.

On comprend alors qu'outre le coût de l'installation des infrastructures photovoltaïques, la durée d'installation est relativement longue.

Par ailleurs, suite à l'étude de terrain, il peut s'avérer que l'installation d'une infrastructure photovoltaïque est impossible.

Cela oblige alors à recommencer toutes les étapes de recherche d'une localisation et d'étude de positionnement de l'infrastructure photovoltaïque en fonction d'une potentielle localisation identifiée.

L'invention a notamment pour objectif de pallier les inconvénients de l'art antérieur.

Plus précisément, l'invention a pour objectif de proposer une infrastructure photovoltaïque dont l'installation est rapide et dont les coûts d'installation et de maintenance sont réduits comparativement aux solutions existantes.

L'invention a également pour objectif de fournir une telle infrastructure dont l'installation est possible sur tout type de sol, ou quasiment.

L'invention a en outre pour objectif de fournir une telle infrastructure photovoltaïque dont la consommation énergétique est inférieure à celles de l'art antérieur pour une taille similaire ou supérieure.

Ces objectifs, ainsi que d'autres qui apparaîtront par la suite, sont atteints grâce à l'invention selon la revendication 1, qui a pour objet une infrastructure photovoltaïque comprenant une armature portant une structure photovoltaïque, l'armature comprenant une portion inférieure destinée à reposer sur un sol, une portion supérieure destinée à être montée à rotation sur la portion inférieure, et des moyens moteurs destinés à mettre en rotation la portion supérieure sur la portion inférieure, la portion inférieure comprenant au moins trois pieds présentant chacun une première extrémité par laquelle ils sont en contact avec le sol,
caractérisé en ce que chaque pied présente une deuxième extrémité par laquelle les trois pieds sont reliés les uns aux autres, et en ce que chaque pied comprend également, à sa deuxième extrémité, un organe de réception et de guidage en rotation de la portion supérieure sur la portion inférieure,
et en ce que chaque pied comprend un épaulement formant l'organe de réception et de guidage dudit pied, chaque épaulement formant un secteur d'un anneau définissant une piste annulaire de guidage en rotation de la portion supérieure,
et en ce que la portion supérieure porte une bague présentant une rainure annulaire destinée à recevoir les épaulements.

Une telle infrastructure photovoltaïque présente l'avantage d'être installée plus rapidement que les infrastructures de l'art antérieur.

En effet, grâce à la portion inférieure de l'armature, il est possible de se passer d'une dalle en béton.

Dès lors, il n'est plus nécessaire d'attendre la réalisation des travaux de terrassement pour installer l'infrastructure photovoltaïque.

De plus, cela réduit les coûts d'installation puisque le terrassement n'est plus nécessaire.

En outre, l'installation de l'infrastructure photovoltaïque se trouve simplifiée puisqu'une opération de pré-installation peut être réalisée en usine, évitant alors de procéder au réglage et à l'ajustement de positionnement, in situ, de la portion supérieure sur la portion inférieure, de sorte à assurer leur mouvement de rotation relatif.

Enfin, le transport de l'infrastructure photovoltaïque jusqu'à son site d'installation se trouve simplifié puisque chaque pied peut être transporté indépendamment des autres, ce qui limite le recours à un convoi exceptionnel pouvant être relativement coûteux et complexe à mettre en place.

La coopération entre la rainure annulaire et l'épaulement annulaire est une solution fiable dans le temps, qui limite la maintenance.

Par ailleurs, les organes de réception et de guidage, et la bague peuvent être constitués, ou à tout le moins, recouverts d'un matériau présentant un faible coefficient de friction.

Selon un autre aspect avantageux, les moyens moteurs comprennent un moteur principal solidaire de la portion inférieure et couplé à une roue dentée, et la portion supérieure intègre une couronne dentée destinée à coopérer avec ladite roue dentée.

Selon une variante de réalisation avantageuse, les moyens moteurs comprennent un moteur principal solidaire de la portion supérieure et couplé à une roue dentée, et la portion inférieure intègre une couronne dentée destinée à coopérer avec ladite roue dentée.

De telles architectures permettent de faciliter l'accès au moteur principal pour sa maintenance.

En outre, de telles architectures permettent de conserver une masse en position basse, ce qui favorise la résistance de l'infrastructure photovoltaïque aux efforts induits par le vent.

Selon un autre aspect avantageux, la structure photovoltaïque est montée mobile à rotation sur la portion supérieure de l'armature.

Cela permet de ne déplacer que la structure photovoltaïque en fonction de la position du soleil, ce qui limite la consommation d'énergie de l'infrastructure photovoltaïque.

Selon un autre aspect avantageux, la portion supérieure de l'armature comprend des moyens d'inclinaison de la structure photovoltaïque.

Les moyens d'inclinaison permettent d'optimiser la position de la structure photovoltaïque en fonction de la position du soleil.

Ainsi, en optimisant la position de la structure photovoltaïque le rendement de production de l'infrastructure photovoltaïque est amélioré.

Selon un autre aspect avantageux, les moyens d'inclinaison comprennent un moteur secondaire situé dans une partie basse de la portion supérieure et des éléments de transmission reliant le moteur secondaire à la structure photovoltaïque.

La position du moteur secondaire dans une partie basse de la portion supérieure permet de limiter le poids dans la partie haute de l'infrastructure, au bénéfice de la stabilité de l'infrastructure photovoltaïque.

En outre, la position du moteur secondaire dans une partie basse de la portion supérieure permet d'en faciliter sa maintenance puis qu'un technicien n'a pas à escalader la portion supérieure pour atteindre le moteur secondaire, ou d'avoir recours à une nacelle qui alourdirait les coûts de maintenance.

Selon un autre aspect avantageux, les premières extrémités des pieds de la portion inférieure forment un premier plan et les deuxièmes extrémités des pieds de la portion inférieure forment un deuxième plan, le premier plan et le deuxième plan étant distants l'un de l'autre.

Une telle architecture permet un enfouissement partiel de la portion inférieure de l'armature tout en maintenant la deuxième extrémité au-dessus du sol pour y accéder facilement.

En outre, cela permet de positionner toutes les machines nécessaires à la production d'électricité sous la portion inférieure de l'armature, et ainsi de les protéger.

Selon un autre aspect avantageux, la portion inférieure et la portion supérieure sont formées par assemblage mécano-soudé de tubes.

L'utilisation d'un assemblage mécano-soudé de tubes permet de rendre l'armature résistante tout en limitant son poids.

Selon un autre aspect avantageux, la première extrémité de chaque pied présente une interface de liaison à un poids destiné à lester la portion inférieure de l'armature.

Lorsque la portion inférieure de l'armature n'est pas enfouie, cela permet de garantir la stabilité de l'infrastructure photovoltaïque.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrits ci-après.
- [Fig.1] La [Fig.1] est une représentation schématique en vue de dessus d'une infrastructure photovoltaïque selon l'invention ;
- [Fig.2] La [Fig.2] est une représentation schématique en vue latérale d'une portion inférieure d'une armature de l'infrastructure photovoltaïque selon l'invention, selon un premier cas d'utilisation ;
- [Fig.3] La [Fig.3] est une représentation schématique en vue latérale d'une portion inférieure de l'armature de l'infrastructure photovoltaïque selon l'invention, selon un deuxième cas d'utilisation ;

- [Fig.4] La [Fig.4] est une représentation schématique en coupe longitudinale d'une portion supérieure de l'armature de l'infrastructure photovoltaïque selon l'invention, selon un premier cas d'utilisation ;
- [Fig.5] La [Fig.5] est une représentation schématique en perspective de dessus d'une structure photovoltaïque de l'infrastructure photovoltaïque selon l'invention.

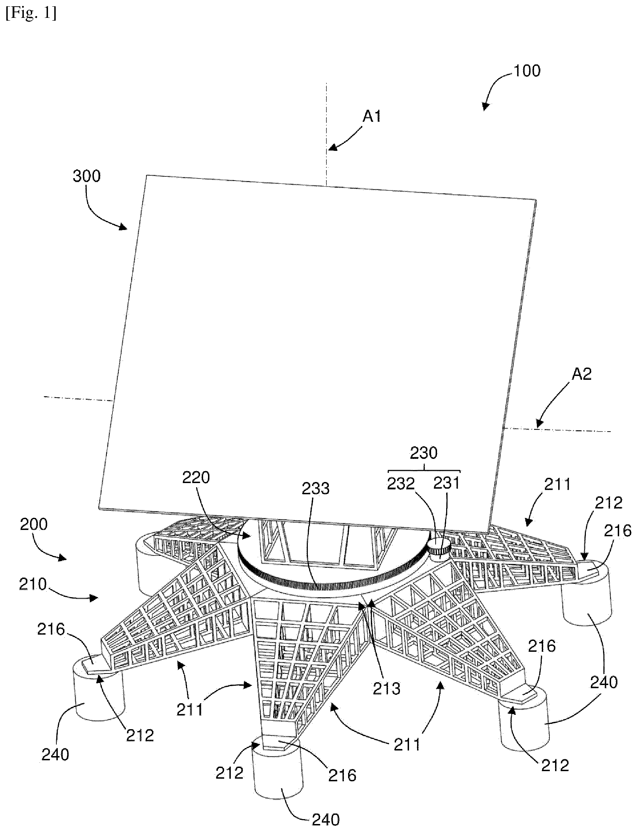

La [Fig.1] illustre une infrastructure 100 photovoltaïque selon l'invention.

L'infrastructure 100 comprend :
- une armature 200,
- une structure photovoltaïque 300 montée sur l'armature 200.

Plus spécifiquement, l'armature 200 porte la structure photovoltaïque 300.

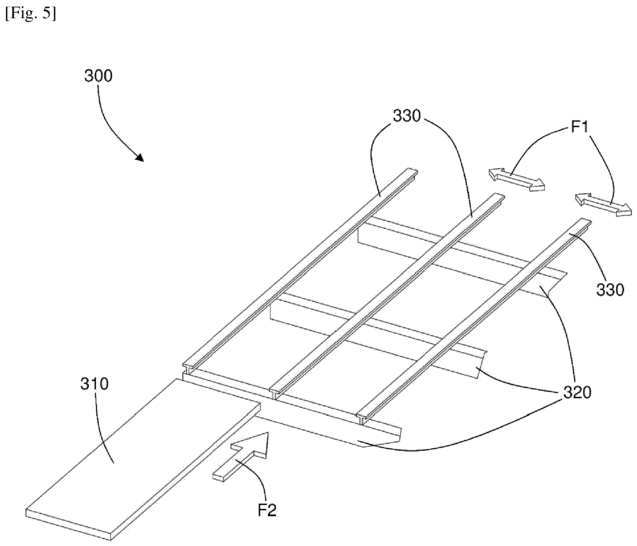

La structure photovoltaïque 300, comme il sera décrit ci-après en référence à la [Fig.5], comprend une pluralité de panneaux solaires 310 montés sur un treillis métallique formé par des traverses 320 et des longerons 330.

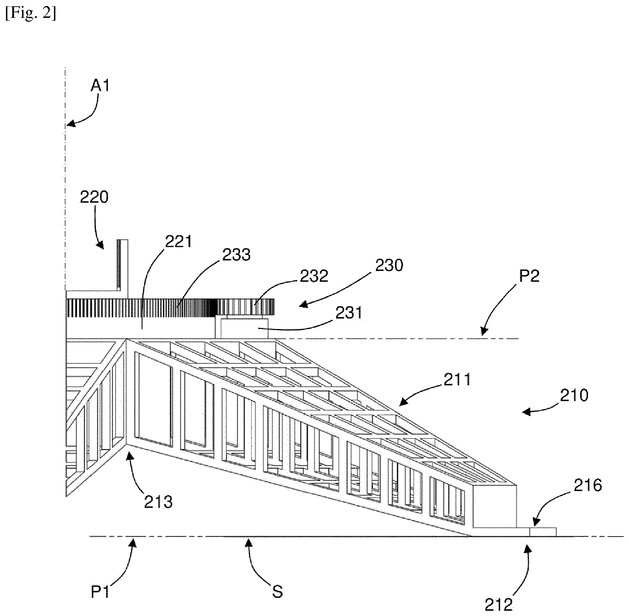

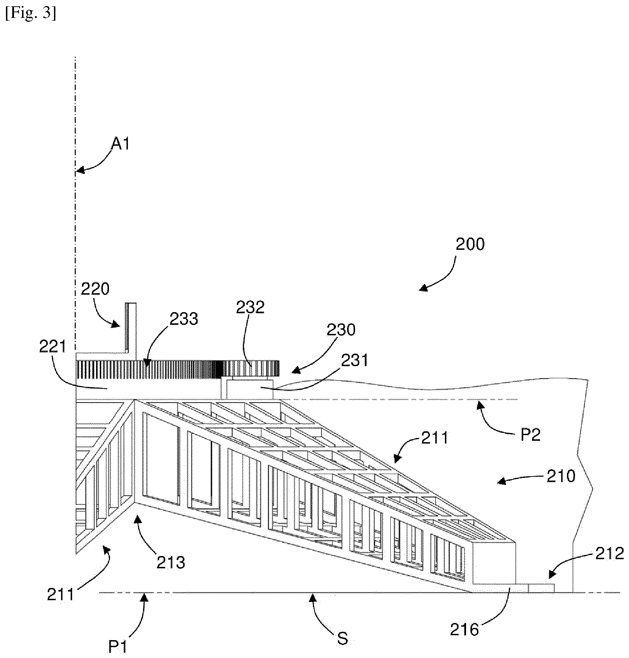

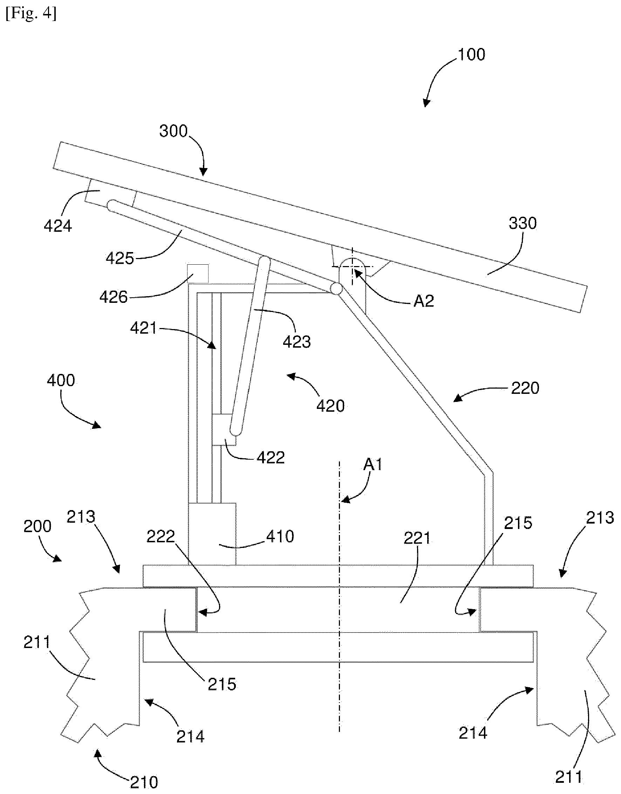

L'armature 100 comprend une portion inférieure 210 et une portion supérieure 220. La portion supérieure 220 est portée par la portion inférieure 210. La [Fig.2] et la [Fig.3] illustrent la portion inférieure 210 de l'armature 200 alors que la [Fig.4] illustre la portion supérieure 220.

L'armature 200 comprend également des moyens moteurs 230 destinés à mettre en rotation la portion supérieure 220 sur la portion inférieure 210.

La portion inférieure 210 est destinée à reposer sur un sol S.

Selon une première utilisation illustrée par la [Fig.2], la portion inférieure 210 de l'armature 200 repose directement sur un sol S nu.

Par sol S nu, il est entendu qu'aucun travail du sol n'a été effectué hormis un éventuel désherbage.

En d'autres termes, le sol S n'a pas été creusé et/ou aplani.

Selon une deuxième utilisation illustrée par la [Fig.3], la portion inférieure 210 de l'armature 200 repose directement sur un sol S travaillé.

Par sol S travaillé, il est entendu que des travaux du sol ont été effectués, pour enfouir au moins partiellement l'armature 200.

A titre d'exemple illustratif, un décaissement a été créé dans le sol S afin que la portion inférieure 210 de l'armature 200 y soit logée puis recouverte, par exemple de terre ou de sable.

En variante, la portion inférieure 210 pourrait être recouverte de terre ou sable, sans qu'un décaissement ne soit effectué. Cela permet notamment une installation de l'infrastructure 100 dans un désert par exemple.

La portion inférieure 210 comprend au moins trois pieds 211. Sur le mode de réalisation illustré par la [Fig.1], la portion inférieure 210 présente six pieds 211 dont seulement cinq sont visibles.

Tel qu'illustré par les figures 2 et 3, chaque pied 211 présente une première extrémité 212, par laquelle il est en contact avec le sol S, et une deuxième extrémité 213, par laquelle il est relié aux autres pieds 211.

Plus précisément, tel qu'illustré par les figures 1 à 3, les pieds 211 sont disposés de telle sorte qu'ils s'étendent en étoile depuis un centre dans lequel est reçue une partie de la portion supérieure 220, comme expliqué ci-après.

En référence à la [Fig.2] et à la [Fig.3], les premières extrémités 212 des pieds 211 de la portion inférieure 210 forment un premier plan P1 et les deuxièmes extrémités 213 des pieds 211 de la portion inférieure 210 forment deuxième plan P2.

Tel que cela est illustré, le premier plan P1 et le deuxième plan P2 sont distants l'un de l'autre. Le deuxième plan P2 est situé au-dessus du premier plan P1 par rapport au sol S.

Cela permet que la portion inférieure 210 forme un moyen de surélévation de la portion supérieure 220 par rapport au sol S.

En référence à la [Fig.2] et à la [Fig.3], chaque pied 211 comprend également, à sa deuxième extrémité 213, un organe 214 de réception et de guidage en rotation de la portion supérieure 220 sur la portion inférieure 210.

Les organes 214 de réception et de guidage forment un épaulement annulaire 215.

Pour permettre sa rotation sur la portion inférieure 210, la portion supérieure 220 porte une bague 221 présentant une rainure annulaire 222 destinée à recevoir l'épaulement annulaire 215 des organes 214 de réception et de guidage.

En venant se loger dans la rainure annulaire 222, l'épaulement 215 de chaque pied 211 permet à la fois guider en rotation la portion supérieure 220 et de la bloquer en translation selon l'axe de rotation.

En d'autres termes, chaque épaulement 215 forme un secteur d'un anneau définissant une piste annulaire de guidage en rotation de la portion supérieure 220.

La portion supérieure 220 peut ainsi tourner autour d'un premier axe A1 perpendiculaire au premier plan P1, c'est-à-dire au sol S.

Pour permettre la rotation de la portion supérieure 220 sur la portion inférieure 210, autour du premier axe A1, les moyens moteurs 230 comprennent un moteur principal 231 couplé à une roue dentée 232, et une couronne 233 dentée.

La couronne dentée 233 est destinée à coopérer avec la roue dentée 232.

Selon une première forme de réalisation, le moteur principal 231 est solidaire de la portion inférieure 210, et la couronne 233 dentée est intégrée à la portion supérieure 220.

Dans ce cas, et comme cela est illustré par les figures 2 et 3, la couronne 233 dentée est portée par la bague 221.

A l'inverse, selon une deuxième forme de réalisation, le moteur principal 231 est solidaire de la portion supérieure 220, et la couronne 233 dentée est intégrée à la portion inférieure 210.

Des moyens d'asservissement peuvent également être prévus.

Ces moyens d'asservissement comprennent par exemple au moins :
- un capteur de position ;
- un capteur de luminosité, et
- une unité centrale.

Le capteur de position est destiné à acquérir des données de positionnement de la portion supérieure 220 par rapport à la portion inférieure 210, puis à les transmettre à l'unité centrale.

Le capteur de luminosité est destiné à acquérir des données de luminosité, puis à les transmettre à l'unité centrale. Un tel capteur de luminosité peut ainsi permettre le suivi du soleil en fonction de la quantité de lumière qu'il capte.

L'unité centrale est paramétrée pour piloter le moteur principal 231 afin de faire pivoter la portion supérieure 220 par rapport à la portion inférieure 210, après réception des données provenant du capteur de position et du capteur de luminosité.

Tel que cela est illustré par les figures 1 à 4, la portion inférieure 210 et la portion supérieure 220 de l'armature 200, sont formées par assemblage mécano-soudé de tubes.

Cela permet d'offrir une bonne résistance mécanique aux efforts, par exemple le poids propre de l'infrastructure 100 et les efforts dus aux conditions météorologiques (vent et pluie notamment), tout en limitant le poids total de l'infrastructure 100.

Par ailleurs, tel que cela est illustré par la [Fig.2], la première extrémité 212 de chaque pied 211 présente une interface 216 de liaison à un poids 240. Le poids 240 est destiné à lester la portion inférieure 210 de l'armature 200.

Selon une forme de réalisation, chaque interface 216 de liaison est reliée à un poids 240 individuel qui peut être formé par un bloc en béton. Selon une deuxième forme de réalisation, chaque poids 240 peut être formé par une cuve destinée à être remplie d'eau ou de sable.

En variante, chaque interface 216 de liaison est reliée à un poids 240 unique prenant la forme d'un anneau en matériau métallique. Un tel anneau permet par ailleurs de rigidifier la portion inférieure 210 de l'armature 200.

En référence à la [Fig.4], la structure photovoltaïque 300 est montée mobile à rotation sur la portion supérieure 220 de l'armature 200.

Plus particulièrement, la structure photovoltaïque 300 est montée à rotation sur la portion supérieure 220 selon un deuxième axe 2. Le deuxième axe A2 s'étend perpendiculairement au premier axe A1 et parallèlement au premier plan P1.

Cela permet d'incliner la structure photovoltaïque 300 en fonction de l'emplacement de l'infrastructure 100 photovoltaïque et/ou de la position du soleil.

En fonction du besoin, l'inclinaison de la structure photovoltaïque 300 peut être évolutive dans le temps, par exemple durant un cycle journalier de production.

Pour cela, la portion supérieure 220 de l'armature 200 comprend des moyens d'inclinaison 400 de la structure photovoltaïque 300.

En référence à la [Fig.4], les moyens d'inclinaison 400 comprennent un moteur secondaire 410 situé dans une partie basse de la portion supérieure 220 et des éléments de transmission 420 reliant le moteur secondaire 410 à la structure photovoltaïque 300.

Plus spécifiquement, les moyens de transmission 420 comprennent :
- une vis sans fin 421 couplée au moteur secondaire 410 ;
- un chariot 422 monté mobile sur la vis sans fin 421, et
- une bielle 423 assurant la liaison entre le chariot 422 et un coulisseau 424 monté coulissant sur la structure photovoltaïque 300.

Plus précisément, le coulisseau 424 est monté coulissant sur l'un au moins des longerons 330 de la structure photovoltaïque 300.

La bielle 423 est montée à rotation sur le chariot 422 et sur une biellette 425 qui est montée à rotation sur le coulisseau 424, selon des axes de rotation parallèles au deuxième axe A2.

La biellette 425 est également montée à rotation sur la portion supérieure 220 de l'armature 200.

Lorsque le moteur secondaire 410 est activé, il entraîne en rotation la vis sans fin 421. Le chariot 422, contraint par sa liaison avec la bielle 423, se déplace alors le long de la vis sans fin 421.

Au fur et à mesure de son déplacement sur la vis sans fin 421, le chariot 422 transmet son mouvement au coulisseau 424 via la bielle 423 et la biellette 425.

Cela provoque alors le déplacement en rotation de la structure photovoltaïque 300 par rapport à la portion supérieure 220 de l'armature 200, autour du deuxième axe A2.

Selon le sens de rotation de la vis sans fin 421, le chariot 422 s'éloigne ou se rapproche du moteur secondaire 410, ce qui provoque un déplacement vers de la structure photovoltaïque vers une position sensiblement horizontale ou, inversement, vers une position sensiblement verticale

Tel qu'illustré par la [Fig.4], la rotation de la structure photovoltaïque 300 autour du deuxième axe A2 n'est pas réalisée au centre de la structure photovoltaïque 300.

En effet, le point de rotation de la structure photovoltaïque est décalé par rapport au centre de la structure photovoltaïque 300 de sorte à permettre un passage de la structure photovoltaïque 300 d'une position inclinée à une position de repos, également appelée position de sécurité, dans laquelle la structure photovoltaïque 300 s'étend sensiblement horizontalement, c'est-à-dire parallèlement au sols S, ou quasiment.

Tel que cela est illustré par la [Fig.4], la portion supérieure 220 de l'armature 200 porte un amortisseur 426 destiné à amortir l'impact de la structure photovoltaïque 300 sur l'armature 200 lorsque la structure photovoltaïque 300 atteint sa position de repos.

L'amortisseur 426 peut comprendre une cage métallique solidaire de la portion supérieure 220 de l'armature 200, logeant un bloc en caoutchouc.

Lors de l'impact de la structure photovoltaïque 300 sur l'armature 200, le bloc en caoutchouc se déforme élastiquement pour absorber l'énergie cinétique du déplacement de la structure photovoltaïque 300 jusqu'à sa position de repos.

La [Fig.5] illustre une particularité de la structure photovoltaïque 300.

Pour faciliter le montage des panneaux solaires 310, certains au moins des longerons 330 sont montés mobiles en translation sur les traverses 320, comme symbolisé par les flèches F1 sur la [Fig.5].

Ainsi, l'espace entre deux longerons 330 adjacents peut être agrandi pour permettre le positionnement des panneaux solaires 310.

Des moyens de verrouillage en position des longerons 330 sur les traverses 320 peuvent également être prévus.

A titre d'exemple, les moyens de verrouillage peuvent prendre la forme de vis de serrage des longerons 330 sur les traverses 320. D'autres moyens de verrouillage ad hoc peuvent être utilisés.

Selon une forme de réalisation particulière, les traverses 320 peuvent être réalisées par des tôles présentant des découpes ou par un assemblage de plusieurs profilés définissant une structure tubulaire, cela afin d'en réduire leur poids.

Le premier axe A1 et le deuxième axe A2 sont perpendiculaires l'un par rapport à l'autre et forment, avec un troisième axe perpendiculaire au premier axe A1 et au deuxième axe A2, un trièdre orthonormé direct. Dans ce trièdre, le deuxième axe A2 et le troisième axe définissent un plan parallèle au premier plan P1.

Lorsque le terme « perpendiculairement » est employé dans cette description, il est sous-entendu qu'il prend en compte les jeux fonctionnels et les tolérances de fabrication. Ainsi, si le terme « perpendiculairement » fait référence à un angle de 90°, il englobe les valeurs d'angle au moins comprises entre 88° et 92°, voire plus en fonction d'une flèche prise par des éléments longitudinaux sous l'effet de leur propre poids.

## Revendications

1. Infrastructure (100) photovoltaïque comprenant une armature (200) portant une structure photovoltaïque (300), l'armature (200) comprenant une portion inférieure (210) destinée à reposer sur un sol (S), une portion supérieure (220) destinée à être montée à rotation sur la portion inférieure (210), et des moyens moteurs (230) destinés à mettre en rotation la portion supérieure (220) sur la portion inférieure (210), la portion inférieure (210) comprenant au moins trois pieds (211) présentant chacun une première extrémité (212) par laquelle ils sont en contact avec le sol (S), chaque pied présente une deuxième extrémité (213) par laquelle les trois pieds (211) sont reliés les uns aux autres, et en ce que chaque pied (211) comprend également, à sa deuxième extrémité (213), un organe (214) de réception et de guidage en rotation de la portion supérieure (220) sur la portion inférieure (210), **caractérisé en ce que** chaque pied (211) comprend un épaulement (215) formant l'organe (214) de réception et de guidage dudit pied (211), chaque épaulement (215) formant un secteur d'un anneau définissant une piste annulaire de guidage en rotation de la portion supérieure (220), et **en ce que** la portion supérieure (220) porte une bague (221) présentant une rainure annulaire (222) destinée à recevoir les épaulements (215).

2. Infrastructure (100) photovoltaïque selon la revendication précédente, **caractérisée en ce que** les moyens moteurs (230) comprennent un moteur principal (231) solidaire de la portion inférieure (210) et couplé à une roue dentée (232), et la portion supérieure (220) intègre une couronne (233) dentée destinée à coopérer avec ladite roue dentée (232).

3. Infrastructure (100) selon l'une quelconque des revendications 1 ou 2, **caractérisée en ce que** les moyens moteurs (230) comprennent un moteur principal (231) solidaire de la portion supérieure (220) et couplé à une roue dentée (232), et la portion inférieure (210) intègre une couronne (233) dentée destinée à coopérer avec ladite roue dentée (232).

4. Infrastructure (100) selon l'une quelconque des revendications précédentes, **caractérisée en ce que** la structure photovoltaïque (300) est montée mobile à rotation sur la portion supérieure (220) de l'armature (200).

5. Infrastructure (100) selon la revendication précédente, **caractérisée en ce que** la portion supérieure (220) de l'armature (200) comprend des moyens d'inclinaison (400) de la structure photovoltaïque (300).

6. Infrastructure (100) selon la revendication précédente, **caractérisée en ce que** les moyens d'inclinaison (400) comprennent un moteur secondaire (410) situé dans une partie basse de la portion supérieure (220) et des éléments de transmission (420) reliant le moteur secondaire (410) à la structure photovoltaïque (300).

7. Infrastructure (100) selon l'une quelconque des revendications précédentes, **caractérisée en ce que** les premières extrémités (212) des pieds (211) de la portion inférieure (210) forment un premier plan (P1) et les deuxièmes extrémités (213) des pieds (211) de la portion inférieure (210) forment deuxième plan (P2), le premier plan (P1) et le deuxième plan (P2) étant distants l'un de l'autre.

8. Infrastructure (100) selon l'une quelconque des revendications précédentes, **caractérisée en ce que** la portion inférieure (210) et la portion supérieure (220) sont formées par assemblage mécano-soudé de tubes.

9. Infrastructure (100) selon l'une quelconque des revendications précédentes, **caractérisée en ce que** la première extrémité (212) de chaque pied (211) présente une interface (216) de liaison à un poids (240) destiné à lester la portion inférieure (210) de l'armature (200).

## Patentansprüche

1. Photovoltaik-Infrastruktur (100), umfassend einen Rahmen (200), diere eine Photovoltaikstruktur (300) trägt, wobei der Rahmen (200) einen unteren Abschnitt (210), der dazu bestimmt ist, auf einem Boden (S) aufzuliegen, einen oberen Abschnitt (220), der dazu bestimmt ist, drehbar auf dem unteren Abschnitt (210) montiert zu werden, und Motormittel (230) umfasst, die dazu bestimmt sind, den oberen Abschnitt (220) auf dem unteren Abschnitt (210) in Drehung zu versetzen, wobei der untere Abschnitt (210) mindestens drei Füße (211) umfasst, die jeweils ein erstes Ende (212) aufweisen, durch das sie den Boden (S) berühren, wobei jeder Fuß ein zweites Ende (213) aufweist, durch das die drei Füße (211) miteinander verbunden sind, und dass jeder Fuß (211) an seinem zweiten Ende (213) auch ein Organ (214) zur Aufnahme und Drehführung des oberen Abschnitts (220) auf dem unteren Abschnitt (210) umfasst,
**dadurch gekennzeichnet, dass** jeder Fuß (211) eine Schulter (215) umfasst, die das Organ (214) zur Aufnahme und Führung des Fußes (211) bildet, dass jede Schulter (215) einen Sektor eines Rings bildet, der eine ringförmige Führungsbahn für die Drehung des oberen Abschnitts (220) definiert, und dass der obere Abschnitt (220) einen Ring (221) trägt, der eine ringförmige Nut (222) aufweist, die dazu bestimmt ist, die Schultern (215) aufzunehmen.

2. Photovoltaik-Infrastruktur (100) nach dem vorhergehenden Anspruch, **dadurch gekennzeichnet, dass** die Motormittel (230) einen Hauptmotor (231) umfassen, der fest mit dem unteren Abschnitt (210) verbunden und mit einem Zahnrad (232) gekoppelt ist, und der obere Abschnitt (220) einen Zahnkranz (233) umfasst, der dazu bestimmt ist, mit dem Zahnrad (232) zusammenzuwirken.

3. Infrastruktur (100) nach einem der Ansprüche 1 oder 2, **dadurch gekennzeichnet, dass** die Motormittel (230) einen Hauptmotor (231) umfassen, der fest mit dem oberen Abschnitt (220) verbunden und mit einem Zahnrad (232) gekoppelt ist, und der untere Abschnitt (210) einen Zahnkranz (233) umfasst, der dazu bestimmt ist, mit dem Zahnrad (232) zusammenzuwirken.

4. Infrastruktur (100) nach einem der vorhergehenden Ansprüche, **dadurch gekennzeichnet, dass** die Photovoltaikstruktur (300) drehbar auf dem oberen Abschnitt (220) des Rahmens (200) montiert ist.

5. Infrastruktur (100) nach dem vorhergehenden Anspruch, **dadurch gekennzeichnet, dass** der obere Abschnitt (220) des Rahmens (200) Neigungsmittel (400) der Photovoltaikstruktur (300) umfasst.

6. Infrastruktur (100) nach dem vorhergehenden Anspruch, **dadurch gekennzeichnet, dass** die Neigungsmittel (400) einen Sekundärmotor (410), der sich in einem unteren Teil des oberen Abschnitts (220) befindet, sowie Übertragungselemente (420) umfassen, die den Sekundärmotor (410) mit der Photovoltaikstruktur (300) verbinden.

7. Infrastruktur (100) nach einem der vorhergehenden Ansprüche, **dadurch gekennzeichnet, dass** die ersten Enden (212) der Füße (211) des unteren Abschnitts (210) eine erste Ebene (P1) bilden und die zweiten Enden (213) der Füße (211) des unteren Abschnitts (210) eine zweite Ebene (P2) bilden, wobei die erste Ebene (P1) und die zweite Ebene (P2) voneinander beabstandet sind.

8. Infrastruktur (100) nach einem der vorhergehenden Ansprüche, **dadurch gekennzeichnet, dass** der untere Abschnitt (210) und der obere Abschnitt (220) durch eine mechanisch geschweißte Röhrenbaugruppe gebildet sind.

9. Infrastruktur (100) nach einem der vorhergehenden Ansprüche, **dadurch gekennzeichnet, dass** das erste Ende (212) jedes Fußes (211) eine Schnittstelle (216) zur Verbindung mit einem Gewicht (240) aufweist, das dazu bestimmt ist, den unteren Abschnitt (210) des Rahmens (200) zu beschweren.

## Claims

1. Photovoltaic infrastructure (100) comprising a frame (200) bearing a photovoltaic structure (300), the frame (200) comprising a lower portion (210) intended to rest on the ground (S), an upper portion (220) intended to be rotatably mounted on the lower portion (210), and motor means (230) intended to rotate the upper portion (220) on the lower portion (210), the lower portion (210) comprising at least three legs (211), each having a first end (212) by which they are in contact with the ground (S),
each leg has a second end (213) by which the three legs (211) are connected to each other, and in that each leg (211) also comprises, at its second end (213), a member (214) for receiving and rotatably guiding the upper portion (220) on the lower portion (210),
**characterised in that** each leg (211) comprises a shoulder (215) forming the member (214) for receiving and guiding said leg (211), each shoulder (215) forming a sector of a ring defining an annular track for guiding the upper portion (220) in rotation, and **in that** the upper portion (220) bears a ring (221) having an annular groove (222) intended to receive the shoulders (215).

2. Photovoltaic infrastructure (100) according to the preceding claim, **characterised in that** the motor means (230) comprise a main motor (231) integral with the lower portion (210) and coupled to a toothed wheel (232), and the upper portion (220) incorporates a toothed ring (233) intended to mesh with said toothed wheel (232).

3. Infrastructure (100) according to any one of claims 1 or 2, **characterised in that** the motor means (230) comprise a main motor (231) integral with the upper portion (220) and coupled to a toothed wheel (232), and the lower portion (210) incorporates a toothed ring (233) intended to mesh with said toothed wheel (232).

4. Infrastructure (100) according to any one of the preceding claims, **characterised in that** the photovoltaic structure (300) is mounted so as to be rotatable on the upper portion (220) of the frame (200).

5. Infrastructure (100) according to the preceding claim, **characterised in that** the upper portion (220) of the frame (200) comprises means (400) for tilting the photovoltaic structure (300).

6. Infrastructure (100) according to the preceding claim, **characterised in that** the tilting means (400) comprise a secondary motor (410) located in a lower part of the upper portion (220) and transmission elements (420) connecting the secondary motor (410) to the photovoltaic structure (300).

7. Infrastructure (100) according to any one of the preceding claims, **characterised in that** the first ends (212) of the legs (211) of the lower portion (210) form a first plane (P1) and the second ends (213) of the legs (211) of the lower portion (210) form a second plane (P2), the first plane (P1) and the second plane (P2) being spaced apart from one another.

8. Infrastructure (100) according to any one of the preceding claims, **characterised in that** the lower portion (210) and the upper portion (220) are formed by a mechanically welded assembly of tubes.

9. Infrastructure (100) according to any one of the preceding claims, **characterised in that** the first end (212) of each leg (211) has an interface (216) for connecting to a weight (240) intended to weight the lower portion (210) of the frame (200).
